# EUROPEAN PATENT SPECIFICATION

(11) **EP 4 008 931 B1**
(45) Date of publication and mention of the grant of the patent: **06.08.2025**
(21) Application number: 21210803.9
(22) Date of filing: 26.11.2021
(51) Int. Cl.: F16H 59/04, F16H 59/02, F16H 63/50

(54) **SHIFT DEVICE**
UMSCHALTVORRICHTUNG
DISPOSITIF DE CHANGEMENT DE VITESSE

(30) Priority: 26.11.2020 JP 2020196153
(43) Date of publication of application: 08.06.2022
(73) Proprietor: Asahi Denso Co., Ltd., Shizuoka 434-0046 (JP)
(72) Inventor: Ota, Mitsuhiro, Shizuoka, 434-0046 (JP)
(74) Representative: Grünecker Patent- und Rechtsanwälte PartG mbB

(56) References cited:
- EP-A1- 3 264 045
- EP-A1- 3 865 737
- WO-A1-2021/140684
- JP-A- 2017 125 681
- US-A1- 2017 254 410

## Description

### Technical Field

The present invention relates to a shift device for transmitting a shift operation of a shift pedal of a vehicle to a transmission to perform a gear-shifting operation.

### Background Art

EP 3 264 045 A1 proposes a stroke sensor with a detection body housing part which is arranged at a part that overlaps in a radial direction with a movement region in an axial line direction of a detected body. The detection body housing part includes a detection body housing recess part that houses a detection body, and a substrate housing part that has a larger inner shape than the detection body housing recess part, opens outward in the radial direction, and is in communication with the detection body housing recess part.

The disclosure of JP 2017 125681 A is also directed to a stroke sensor with a housing comprising a board housing part for a circuit board and a magnetic detection element mounted thereon, which faces a magnet housing part of a shaft in which a magnet is inserted.

US 2017/254410 A1 shows different installation options for a force transmitting device. Based on one of these options, the installation takes place by inserting a torque rod into a shift lever connection. Two angularly offset bores are respectively provided on a shifting end and on a transmission end of the torque rod. After the insertion, a transmission connection and therefore a shift lever are attached such that a transmission stop in the form of a pin can ultimately be inserted in order to complete this step.

Transmissions of two-wheeled vehicles or the likes are capable of performing a gear-shifting operation according to a shift operation of a shift pedal by a driver. In a recent year, it has been proposed that a shift device is attached in a middle of a transmission path for transmitting an operation force of a shift pedal to a transmission. As a shift device of the related art, for example, DE 10 2010 015 036 A1 discloses a device having a shaft member which can be displaced according to a shift operation of a shift pedal, a housing which accommodates the shaft member in a displaceable manner, a magnet attached to the shaft member, and a magnetic sensor attached to the housing.

Such a shift device of the related art is configured such that, when a driver of a two-wheeled vehicle or the like starts operating the shift pedal and the magnetic sensor detects that the shaft member is displaced with respect to the housing, an engine of the vehicle is controlled to adjust drive torque and a gear-shifting operation of the transmission is performed by causing the shaft member and the housing to move integrally in a state where the shaft member reaches a displacement end. As a result, the driver of a two-wheeled vehicle or the like can perform the gear-shifting operation without operating a clutch.

However, in the above-described technique of the related art, since the magnetic sensor is attached to the outside of the housing, a separation dimension between the magnetic sensor and the magnet of the shaft member becomes large.

As a result, in some cases, it is difficult to accurately detect a magnetic change of the magnet due to the displacement of the shaft member. Further, in the above-described technique of the related art, since the magnetic sensor is attached to the outside of the housing, there is a risk of malfunction due to influence of external magnetism.

### Summary

The invention is made in view of such circumstances and an object of the invention is to provide a shift device capable of accurately detecting displacement of a shaft member and suppressing influence of external magnetism to prevent malfunction.

According to the invention defined in independent claim 1, the above object is achieved by providing a shift device comprising: a shaft member configured to be displaced according to a shift operation of a shift pedal of a vehicle; a housing which has an accommodation space configured to accommodate the shaft member in a displaceable manner, the housing configured to move integrally with the shaft member in a state where the shaft member reaches a displacement end to perform a gear-shifting operation of the vehicle; a permanent magnet which is formed on the shaft member, is displaceable together with the shaft member, and generates magnetism; and a detecting unit which detects displacement of the shaft member with respect to the housing by detecting a magnetic change of the permanent magnet, where an opening portion is formed in the housing at a portion corresponding to an arrangement position of the permanent magnet, a case is attached to the opening portion, and the case has a cover portion which covers the opening portion and a protrusion portion which protrudes from the cover portion to the accommodation space of the housing and an accommodation portion capable of accommodating the detecting unit is formed in the protrusion portion.

According to a preferred first aspect of the invention, in the shift device according to the invention, the accommodation portion may include an accommodation recess portion opened at a predetermined position of the cover portion, and the detecting unit may be configured to be attached through an opening of the accommodation recess portion, and wiring of the detecting unit may be extended to the outside from the opening.

According to a preferred second aspect of the invention, in the shift device according to the first aspect, a lid member attached to the cover portion in the case and covering the opening of the accommodation recess portion may be provided.

According to a preferred third aspect of the invention, in the shift device according to the preferred third aspect, the lid member may cover a surface area of the cover portion including the opening of the accommodation recess portion, and a bulging portion bulging along the wiring extending from the opening may be formed.

According to a preferred fourth aspect of the invention, in the shift device according to the preferred second or third aspect, the lid member may have a three-dimensional shape, cover a surface area of the cover portion, and be fastened and fixed together with the case.

According to a preferred fifth aspect of the invention, in the shift device according to the preferred first aspect, a shielding member, configured to be inserted into the case and shield the detecting unit accommodated in the accommodation recess portion from the outside, may be provided.

According to a preferred sixth aspect of the invention, in the shift device according to the invention, the accommodation portion may include an accommodation recess portion opened on a side surface of the protrusion portion and at a predetermined position of the cover portion, the detecting unit may be configured to be attached through an opening on the side surface of the protrusion portion, and the wiring of the detecting unit may be extended to the outside through an opening on the cover portion side.

According to a preferred seventh aspect of the invention, in the shift device according to the preferred sixth aspect, the opening on the side surface of the protrusion portion and the opening on the cover portion side in the accommodation recess portion may form a continuous opening.

According to a preferred eighth aspect of the invention, in the shift device according to the preferred sixth aspect, the opening on the side surface of the protrusion portion and the opening on the cover portion side in the accommodation recess portion may be separately formed, and a closing member for closing the opening on the side surface of the protrusion portion may be provided.

According to the invention defined in independent claim 1, the opening portion is formed in the housing at the portion corresponding to the arrangement position of the permanent magnet, the case is attached to the opening portion, and the case has the cover portion which covers the opening portion and the protrusion portion which protrudes from the cover portion to the accommodation space of the housing, and the accommodation portion which can accommodate the detecting unit is formed in the protrusion portion. Therefore, the displacement of the shaft member can be detected with high accuracy and the influence of magnetism from the outside can be suppressed to prevent malfunction.

According to the preferred first aspect of the invention, the accommodation portion includes the accommodation recess portion opened at the predetermined position of the cover portion, the detecting unit can be attached through the opening of the accommodation recess portion, and the wiring of the detecting unit is extended to the outside from the opening. Therefore, the detecting unit can be arranged closer to the permanent magnet and the displacement of the shaft member can be detected more accurately.

According to the preferred second aspect of the invention, since the lid member attached to the cover portion in the case and covering the opening of the accommodation recess portion is provided, the detecting unit in the accommodation recess portion can be reliably protected by the lid member.

According to the preferred third aspect of the invention, the lid member covers the surface area of the cover portion including the opening of the accommodation recess portion and the bulging portion bulging along the wiring extending from the opening is formed. Therefore, the lid member can protect the detecting unit and cover the surface area of the case to improve the design and the bulging portion can prevent the lid member from interfering with the wiring and allow the wiring to be positioned.

According to the preferred fourth aspect of the invention, the lid member has a three-dimensional shape, covers the surface area of the cover portion, and is fastened and fixed together with the case. Therefore, the lid member having the three-dimensional shape can further improve the design and the lid member can cover the surface area of the case widely by being fastened together with the case.

According to the preferred fifth aspect of the invention, the shielding member which can be inserted into the case and can shield the detecting unit accommodated in the accommodation recess portion from the outside is provided. Therefore, the detecting unit in the accommodation recess portion can be covered with the shielding member to ensure protection.

According to the preferred sixth aspect of the invention, the accommodation portion includes the accommodation recess portion opened on the side surface of the protrusion portion and at the predetermined position of the cover portion, and the detecting unit can be attached through the opening on the side surface of the protrusion portion and the wiring of the detecting unit is extended to the outside through the opening on the cover portion side. Therefore, the work of accommodating the detecting unit in the accommodation portion can be easily performed and the wiring of the detecting unit can be easily extended.

According to the preferred seventh aspect of the invention, the opening on the side surface of the protrusion portion and the opening on the cover portion side in the accommodation recess portion form the continuous opening. Therefore, the wiring can be easily extended from the opening on the cover portion side while accommodating the detecting unit in the accommodation portion from the opening on the side surface of the protrusion portion, and thus the workability at the time of accommodating the detecting unit can be improved.

According to the preferred eighth aspect of the invention, the opening on the side surface of the protrusion portion and the opening on the cover portion side in the accommodation recess portion are separately formed and the closing member for closing the opening on the side surface of the protrusion portion is provided. Therefore, the sealing property between the opening portion of the housing and the case can be improved and the sealing property of the opening on the side surface of the protrusion portion can be ensured by the closing member.

### Brief Description of the Drawings

Fig. 1 is a plan view and a side view illustrating a shift device according to a first embodiment of the invention.
Fig. 2 is a perspective view illustrating the shift device.
Fig. 3 is a cross-sectional view taken along the line III-III in Fig. 1.
Fig. 4 is a cross-sectional view taken along the line IV-IV in Fig. 1.
Fig. 5 is a perspective view illustrating a state in which a permanent magnet and a coil spring are attached to a shaft member in the shift device.
Fig. 6 is a plan view and a side view illustrating a housing in the shift device.
Fig. 7 is a perspective view illustrating the housing.
Fig. 8 is a three-view diagram illustrating a case in the shift device.
Fig. 9 is a perspective view illustrating the case.
Fig. 10 is a cross-sectional view taken along the line X-X in Fig. 8.
Fig. 11 is a cross-sectional view taken along the line XI-XI in Fig. 8.
Fig. 12 is a plan view illustrating a state in which a magnetic sensor is accommodated in the case.
Fig. 13 is a cross-sectional view taken along the line XII-XII in Fig. 12.
Fig. 14 is a plan view and a side view illustrating a shift device according to a second embodiment of the invention.
Fig. 15 is a perspective view illustrating the shift device.
Fig. 16 is a three-view diagram illustrating a lid member in the shift device.
Fig. 17 is a perspective view illustrating the lid member.
Fig. 18 is a plan view and a side view illustrating a shift device according to a third embodiment of the invention.
Fig. 19 is a perspective view illustrating the shift device.
Fig. 20 is a three-view diagram illustrating a case in the shift device.
Fig. 21 is a perspective view illustrating the case.
Fig. 22 is a cross-sectional view taken along the line XXII-XXII in Fig. 20.
Fig. 23 is a cross-sectional view taken along the line XXIII-XXIII in Fig. 20.
Fig. 24 is a plan view illustrating a state in which a magnetic sensor is accommodated in the case.
Fig. 25 is a cross-sectional view taken along the line XII-XII in Fig. 24.
Fig. 26 is a plan view and a side view illustrating a shift device according to a fourth embodiment of the invention.
Fig. 27 is a perspective view illustrating the shift device.
Fig. 28 is a three-view diagram illustrating a case in the shift device.
Fig. 29 is a perspective view illustrating the case.
Fig. 30 is a cross-sectional view taken along the line XXX-XXX in Fig. 28.
Fig. 31 is a cross-sectional view taken along the line XXXI-XXXI in Fig. 28.
Fig. 32 is a perspective view illustrating a closing member applied to the case.
Fig. 33 is a plan view and a side view illustrating a state in which a magnetic sensor is accommodated in the case and an opening is closed by the closing member.
Fig. 34 is a perspective view illustrating a state in which the magnetic sensor is accommodated in the case and the opening is closed by the closing member.
Fig. 35 is a cross-sectional view taken along the line XXXV-XXXV in Fig. 33.
Fig. 36 is a plan view and a side view illustrating a shift device according to a fifth embodiment of the invention.
Fig. 37 is a perspective view illustrating the shift device.
Fig. 38 is a three-view diagram illustrating a case in the shift device.
Fig. 39 is a perspective view illustrating the case.
Fig. 40 is a cross-sectional view taken along the line XL-XL in Fig. 38.
Fig. 41 is a three-view diagram illustrating a shielding member applied to the case.
Fig. 42 is a perspective view illustrating the shielding member applied to the case.
Fig. 43 is a plan view and a side view illustrating a state in which a magnetic sensor is accommodated in the case and shielded by the shielding member.
Fig. 44 is a cross-sectional view taken along the line XLIV-XLIV in Fig. 43.
Fig. 45 is a plan view illustrating a shift device according to a sixth embodiment of the invention.
Fig. 46 is a perspective view illustrating the shift device.
Fig. 47 is a vertical cross-sectional view illustrating the shift device.
Fig. 48 is a three-view diagram illustrating a case in the shift device.
Fig. 49 is a perspective view illustrating the case.
Fig. 50 is a plan view illustrating a state in which a magnetic sensor is accommodated in the case.
Fig. 51 is a cross-sectional view taken along the line LI-LI in Fig. 50.
Fig. 52 is a three-view diagram illustrating a lid member applied to the case.
Fig. 53 is a perspective view illustrating the lid member.
Fig. 54 is a perspective view illustrating a state in which the lid member is attached to the case.
Fig. 55 is an exploded perspective view illustrating a process of attaching the lid member to the case in the shift device.

### Description of Embodiments

Hereinafter, embodiments of the invention will be specifically described with reference to the drawings.

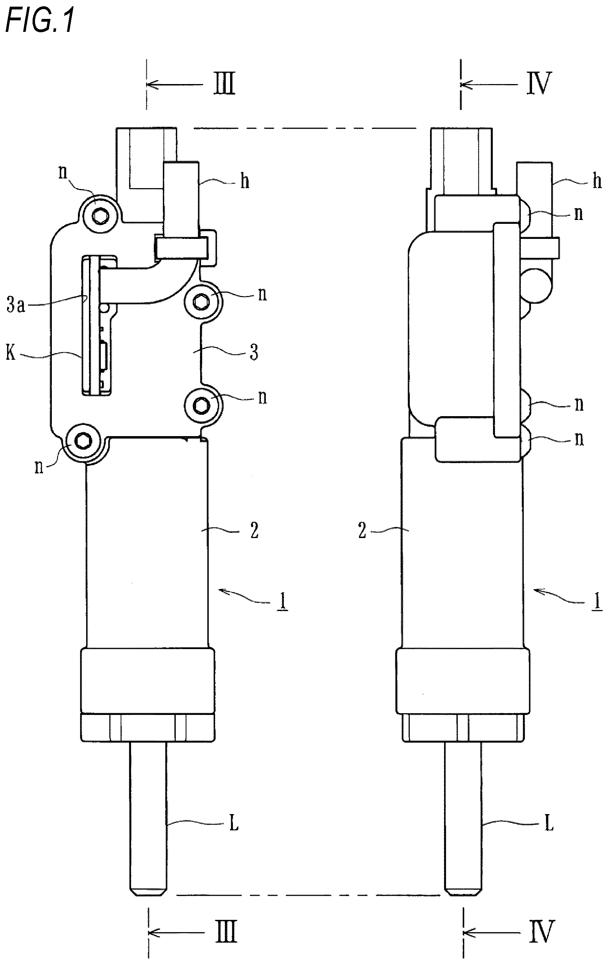

A shift device 1 according to a first embodiment is for transmitting a shift operation of a shift pedal of a vehicle such as a two-wheeled vehicle to a transmission to perform a gear-shifting operation. As illustrated in Figs. 1 to 4, the shift device 1 includes a shaft member L, a housing 2, a permanent magnet M, a case 3, and a magnetic sensor 5 (detecting unit).

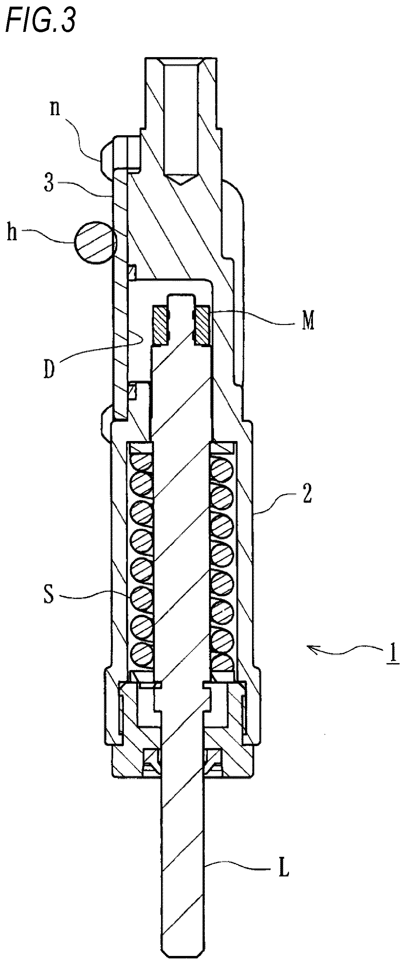

The shaft member L is connected to the shift pedal of the vehicle and can be displaced according to the shift operation of the shift pedal. As illustrated in Figs. 3 to 5, the shaft member L is composed of a shaft-shaped member extending in a longitudinal direction of the housing 2. As illustrated in Figs. 3 to 5, a coil spring S is attached to the shaft member L and the permanent magnet M as a magnetic generating unit is attached to a tip portion thereof. When the shift pedal is operated by a driver of a two-wheeled vehicle or the like, the shaft member L can be displaced in the longitudinal direction against an urging force of the coil spring S.

Further, the permanent magnet M is composed of a cylindrical magnet which generates magnetism. By attaching the permanent magnet M to the tip portion of the shaft member L, the permanent magnet M can be displaced together with the shaft member L in response to the operation of the shift pedal. Further, instead of the permanent magnet M according to the embodiment, permanent magnets having other shapes, one obtained by magnetizing plastic or the like, one obtained by directly magnetizing the shaft member L, or the like may be used, as long as it is attached to the shaft member L to generate magnetism.

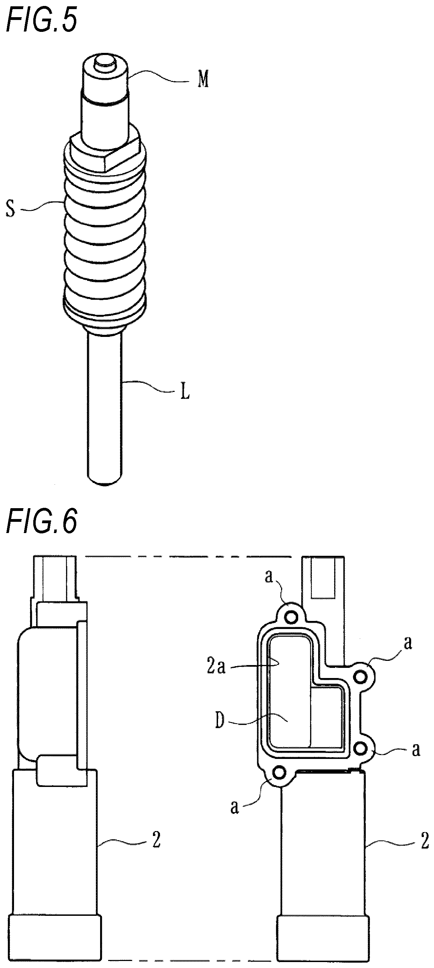

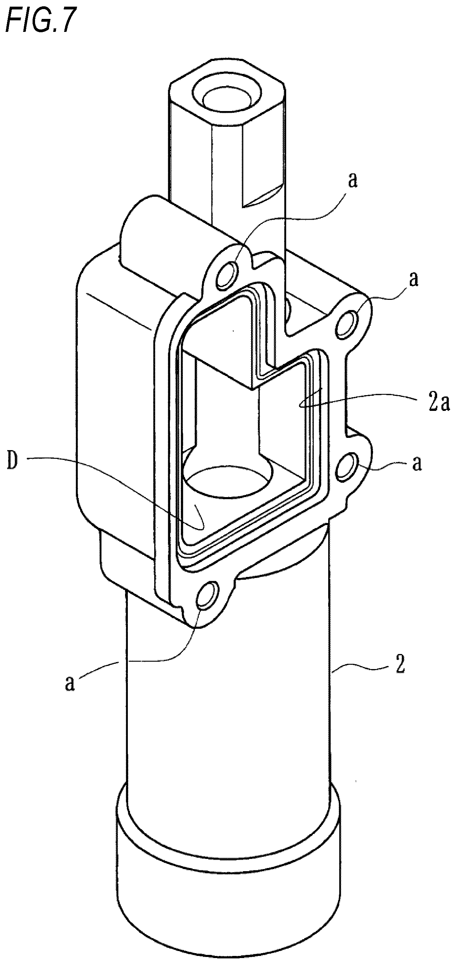

The housing 2 has an accommodation space D which accommodates the shaft member L in a displaceable manner and can move integrally with the shaft member L in a state where the shaft member L reaches a displacement end to perform the gear-shifting operation of the vehicle. As illustrated in Figs. 6 and 7, in the housing 2, an opening portion 2a is formed at a portion corresponding to an arrangement position of the permanent magnet M. In such a housing 2, after the shaft member L reaches the displacement end, the shaft member L and the housing 2 can move integrally in the same direction as the shaft member L is further displaced.

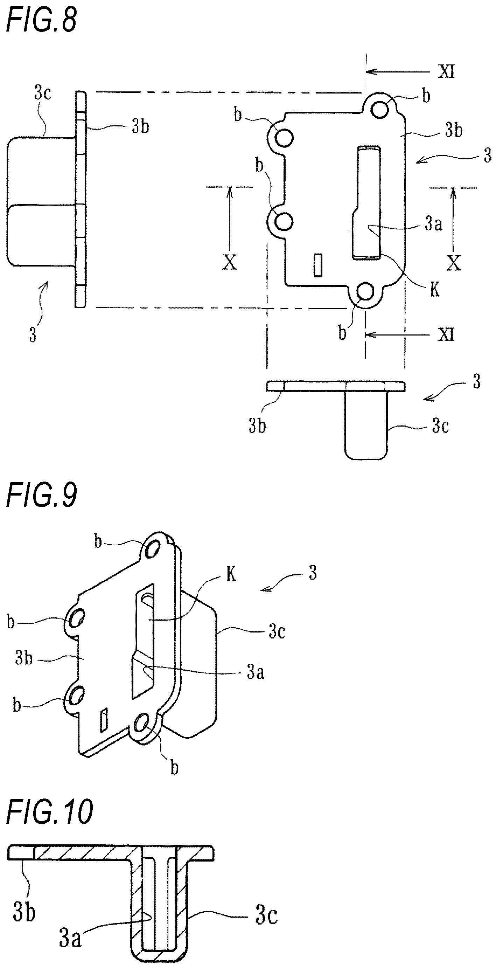

Further, in the housing 2 according to the embodiment, a plurality of screw holes a are formed at an edge of the opening portion 2a and the case 3 can be attached by a screw n inserted into the screw hole a. Such a case 3 can be attached to the opening portion 2a of the housing 2. Further, as illustrated in Figs. 8 to 13, the case 3 is configured to include a cover portion 3b which covers the opening portion 2a in a state of being attached to the housing 2 and a protruding portion 3c which protrudes from the cover portion 3b to the accommodation space D of the housing 2.

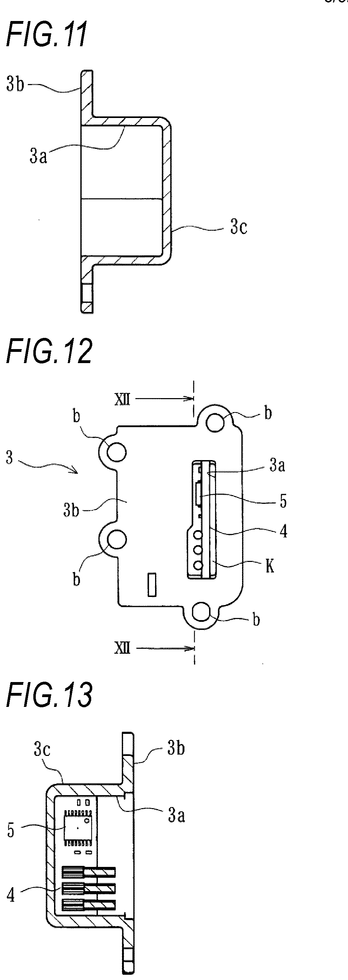

The protruding portion 3c of the case 3 is formed with an accommodation portion capable of accommodating the magnetic sensor 5 and a substrate 4. The accommodation portion according to the embodiment is composed of an accommodation recess portion 3a opened at a predetermined position of the cover portion 3b. As illustrated in Figs. 12 and 13, the magnetic sensor 5 can be attached through an opening K of the accommodation recess portion 3a and wiring h of the magnetic sensor 5 is extended from the opening K to the outside.

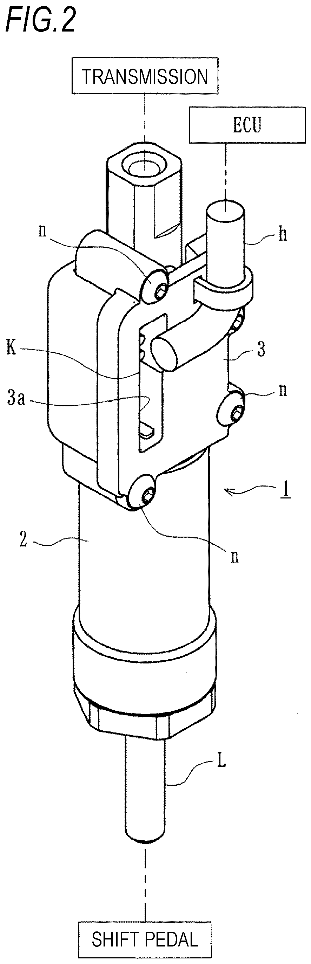

A screw hole b corresponding to the screw hole a of the housing 2 is formed on a peripheral edge of the cover portion 3b. As illustrated in Figs. 1 and 2, the cover portion 3b can be attached to the housing 2 by inserting and screwing the attachment screw n as fastening unit into these screw holes a and b. Further, the accommodation recess portion 3a is filled and solidified with a resin sealing material in a state where the magnetic sensor 5 and the substrate 4 are accommodated.

The magnetic sensor 5 is composed of a sensor such as a Hall IC element formed on the substrate 4 and is configured to detect the displacement of the shaft member L with respect to the housing 2 by detecting a magnetic change of the permanent magnet M. The magnetic sensor 5 may be a sensor of various forms other than a Hall IC element or the like as long as it detects the displacement of the shaft member L with respect to the housing 2 by detecting the magnetic change of the permanent magnet M.

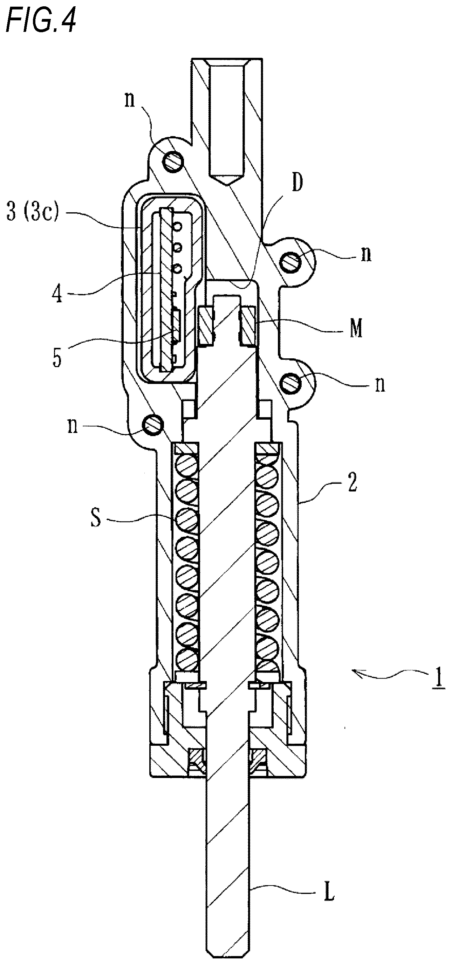

However, by attaching the case 3 to which the magnetic sensor 5 is attached to an opening portion 2c of the housing 2, as illustrated in Fig. 4, the cover portion 3b covers the opening portion 2c and the protruding portion 3c protrudes in the accommodation space D of the housing 2. Therefore, the magnetic sensor 5 accommodated in the accommodation recess portion 3a of the protruding portion 3c is located in a vicinity of the permanent magnet M, and thus it is possible to detect the magnetic change of the permanent magnet M due to the displacement of the shaft member L.

Then, when the magnetic sensor 5 detects a magnetic change, it is determined whether the shaft member L (that is, the shift pedal) starts to be displaced and in which direction it is operated. Therefore, a discrimination signal can be transmitted to, for example, an ECU of the vehicle via the wiring h. As a result, when a driver starts operating the shift pedal and the magnetic sensor 5 detects that the shaft member L is displaced with respect to the housing 2, an engine of the vehicle is controlled to adjust a drive torque and the gear-shifting operation of the transmission can be performed by the shaft member L and the housing 2 moving integrally in a state where the shaft member L reaches the displacement end.

Next, a second embodiment according to the invention will be described.

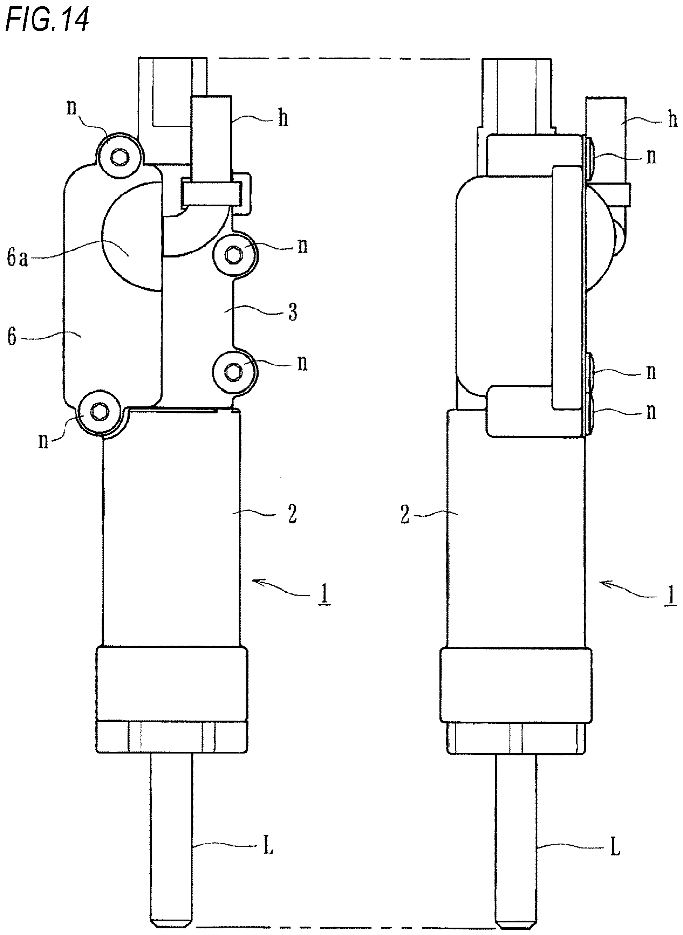

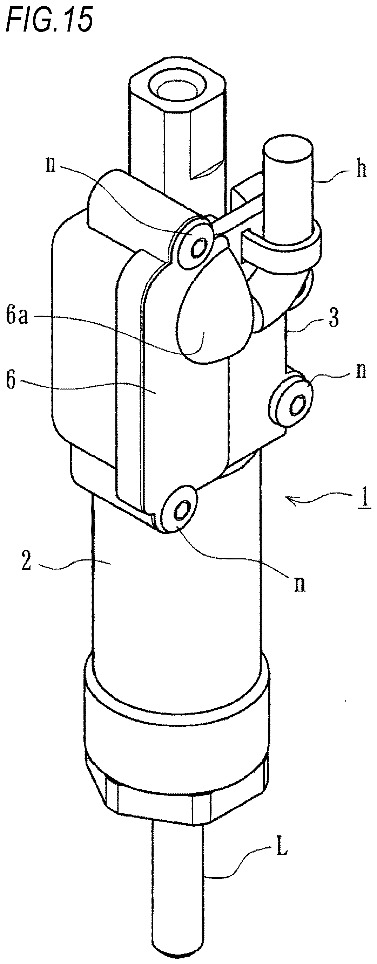

The shift device 1 according to the embodiment is for transmitting the shift operation of the shift pedal of a vehicle such as a two-wheeled vehicle to the transmission to perform the gear-shifting operation. As illustrated in Figs. 14 and 15, the shift device 1 is configured to include the shaft member L, the housing 2, the permanent magnet, the case 3, and the magnetic sensor 5 (detecting unit) (refer to the first embodiment for details of each component), and also include a lid member 6. The same components as those in the first embodiment are designated by the same reference numerals and letters.

The lid member 6 is attached to the cover portion 3b in the case 3 and covers the opening K of the accommodation recess portion 3a. In the embodiment, as illustrated in Figs. 14 and 15, the lid member 6 is configured to cover a surface area (partial region) of the cover portion 3b including the opening K of the accommodation recess portion 3a. As described above, since the lid member 6 attached to the cover portion 3b in the case 3 and covering the opening K of the accommodation recess portion 3a is provided, the magnetic sensor 5 in the accommodation recess portion 3a can be reliably protected by the lid member 6.

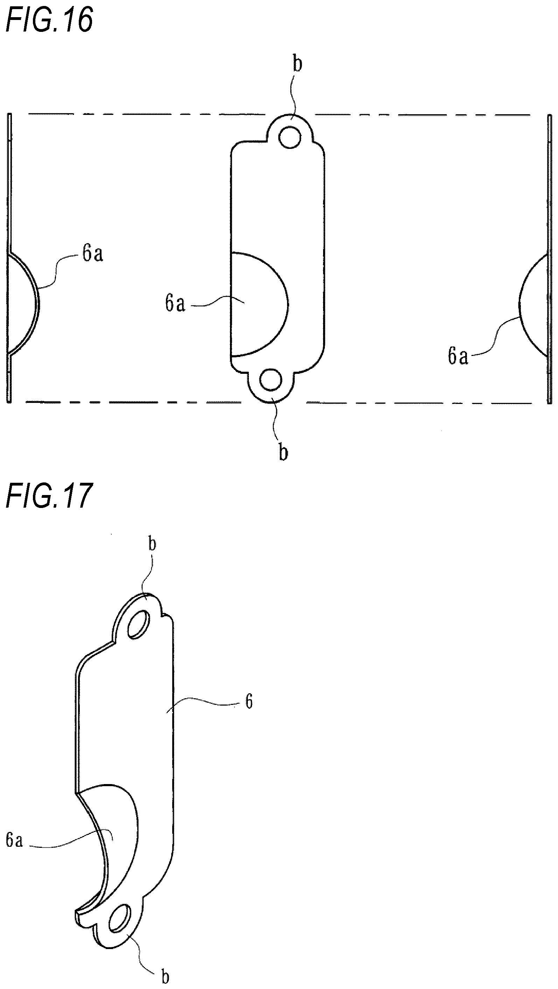

Further, as illustrated in Figs. 16 and 17, in the lid member 6 according to the embodiment, a bulging portion 6a which bulges along the wiring h extending from the opening K is formed in a state where the lid member 6 is attached so as to cover the cover portion 3b of the case 3. Thereby, in the embodiment, the design can be improved by covering a surface area of the case 3 while protecting the magnetic sensor 5 by the lid member 6 and the bulging portion 6a can position the wiring h while preventing interference between the lid member 6 and the wiring h.

According to the first embodiment and the second embodiment, in the housing 2, the opening portion 2a is formed at a portion corresponding to the arrangement position of the permanent magnet M and the case 3 is attached to the opening portion 2a. Further, the case 3 has the cover portion 3b which covers the opening portion 2a and the protruding portion 3c which protrudes from the cover portion 3b to the accommodation space D of the housing 2 and the accommodation recess portion 3a capable of accommodating the magnetic sensor 5 is formed in the protruding portion 3c. As a result, in the first embodiment and the second embodiment, the displacement of the shaft member L can be detected with high accuracy and the influence of magnetism from the outside can be suppressed to prevent malfunction.

Further, the accommodation portion according to the first embodiment and the second embodiment is composed of the accommodation recess portion 3a opened at a predetermined position of the cover portion 3b. The magnetic sensor 5 can be attached via the opening K of the accommodation recess portion 3a and the wiring h of the magnetic sensor 5 is extended from the opening K to the outside. Therefore, the magnetic sensor 5 can be arranged closer to the permanent magnet M, and thus the displacement of the shaft member L can be detected more accurately.

Next, a third embodiment according to the invention will be described.

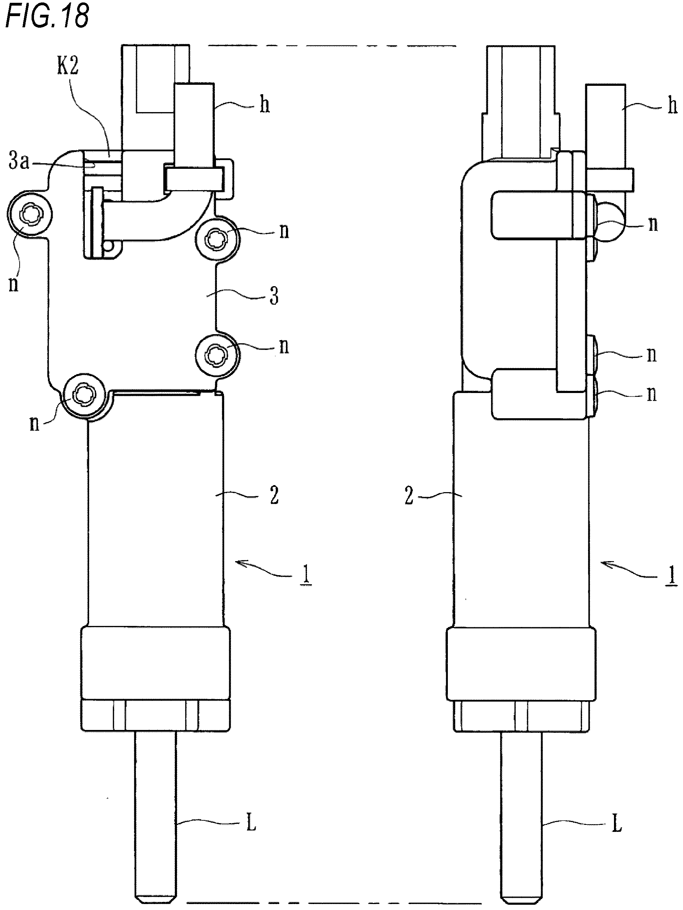

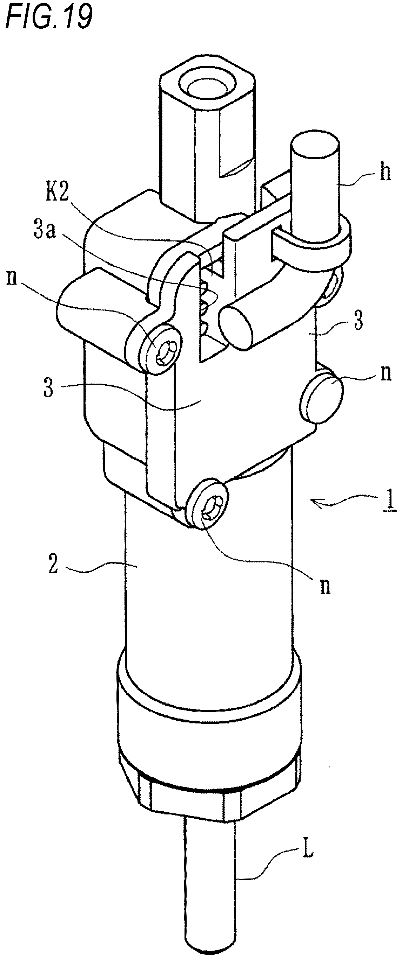

The shift device 1 according to the embodiment is for transmitting the shift operation of the shift pedal of a vehicle such as a two-wheeled vehicle to the transmission to perform the gear-shifting operation. As illustrated in Figs. 18 and 19, the shift device 1 is configured to include the shaft member L, the housing 2, the permanent magnet, the case 3, and the magnetic sensor 5 (detecting unit) (refer to the first embodiment for details of each component other than the case 3). The same components as those in the first embodiment are designated by the same reference numerals and letters.

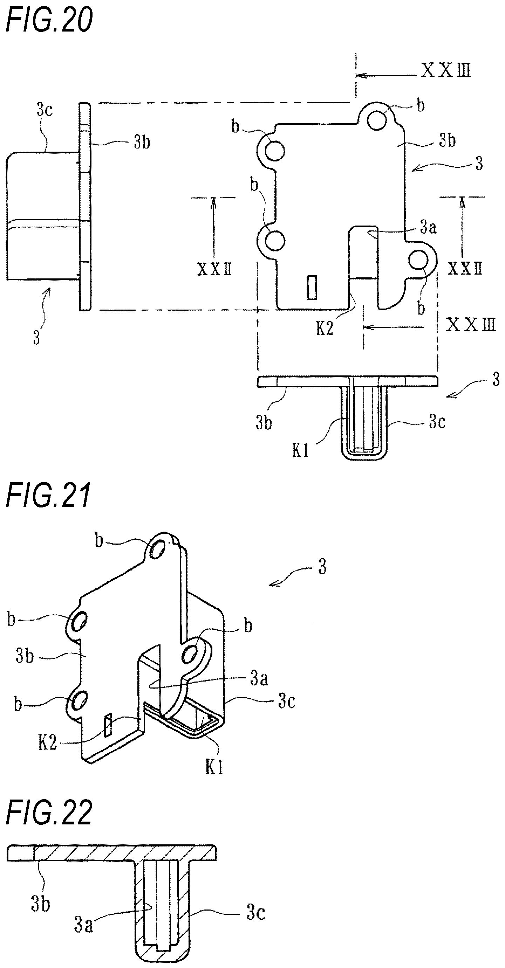

As illustrated in Figs. 18 and 19, the case 3 can be attached to the opening portion 2a of the housing 2. As illustrated in Figs. 20 to 23, the case 3 includes the cover portion 3b which covers the opening portion 2a in a state of being attached to the housing 2 and the protruding portion 3c which protrudes from the cover portion 3b to the accommodation space D of the housing 2. An accommodation portion (accommodation recess portion 3a) capable of accommodating the magnetic sensor 5 and the substrate 4 is formed in the protruding portion 3c of the case 3.

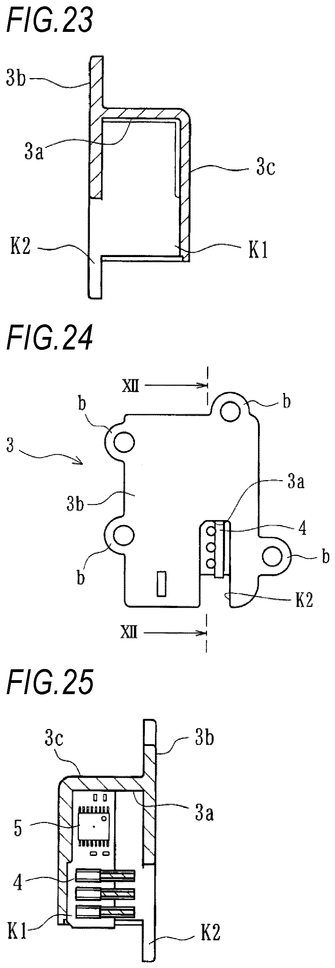

Here, the accommodation portion according to the embodiment is configured of the accommodation recess portion 3a opened on a side surface of the protruding portion 3c and at a predetermined position of the cover portion 3b. As illustrated in Figs. 24 and 25, the accommodation portion is configured so that the magnetic sensor 5 can be attached via an opening K1 on the side surface of the protruding portion 3c and the wiring h of the magnetic sensor 5 is extended to the outside via an opening K2 on the cover portion 3b side. Thereby, in the embodiment, the work of accommodating the magnetic sensor 5 in the accommodation recess portion 3a can be easily performed and the wiring h of the magnetic sensor 5 can be easily extended.

Further, in the embodiment, as illustrated in the drawings mentioned above, the opening K1 on the side surface of the protruding portion 3c and the opening K2 on the cover portion 3b side in the accommodation recess portion 3a form a continuous opening. Therefore, the wiring h can be easily extended from the opening K2 on the cover portion 3b side while accommodating the magnetic sensor 5 from the opening K1 on the side surface of the protruding portion 3c in the accommodation recess portion 3a. As a result, it is possible to improve workability of accommodating the magnetic sensor 5.

Next, a fourth embodiment according to the invention will be described.

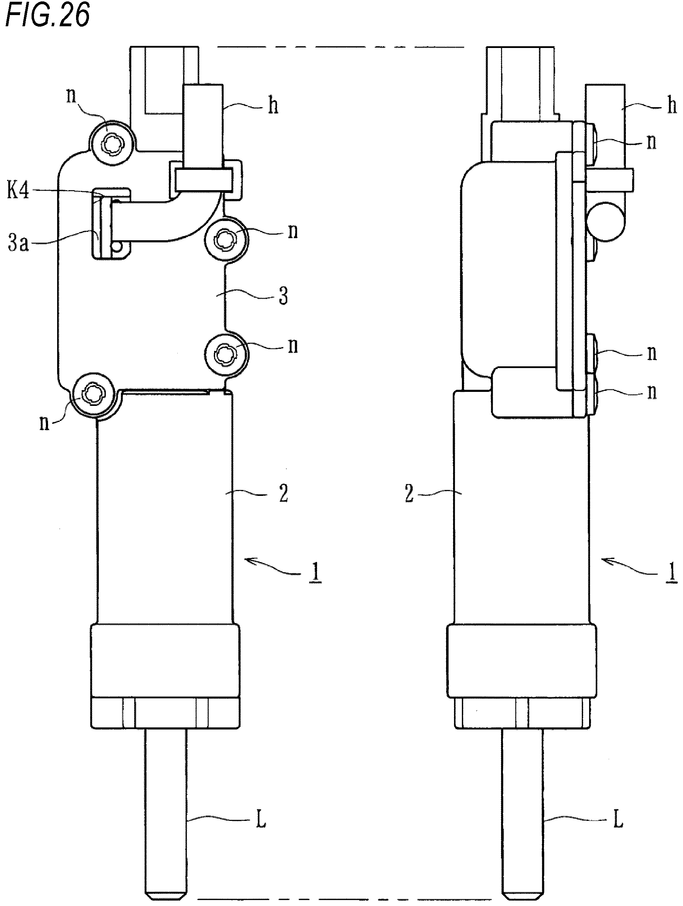

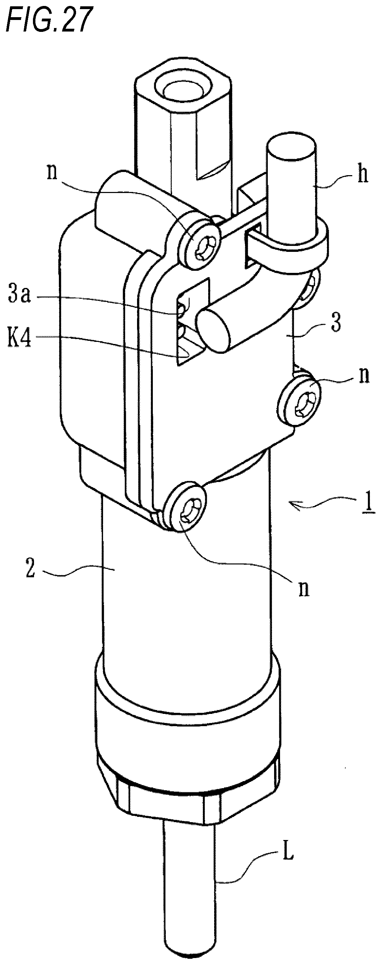

The shift device 1 according to the embodiment is for transmitting the shift operation of the shift pedal of a vehicle such as a two-wheeled vehicle to the transmission to perform the gear-shifting operation. As illustrated in Figs. 26 and 27, the shift device 1 is configured to include the shaft member L, the housing 2, the permanent magnet M, the case 3, and the magnetic sensor 5 (detecting unit) (refer to the first embodiment for details of each component other than the case 3). The same components as those in the first embodiment are designated by the same reference numerals and letters.

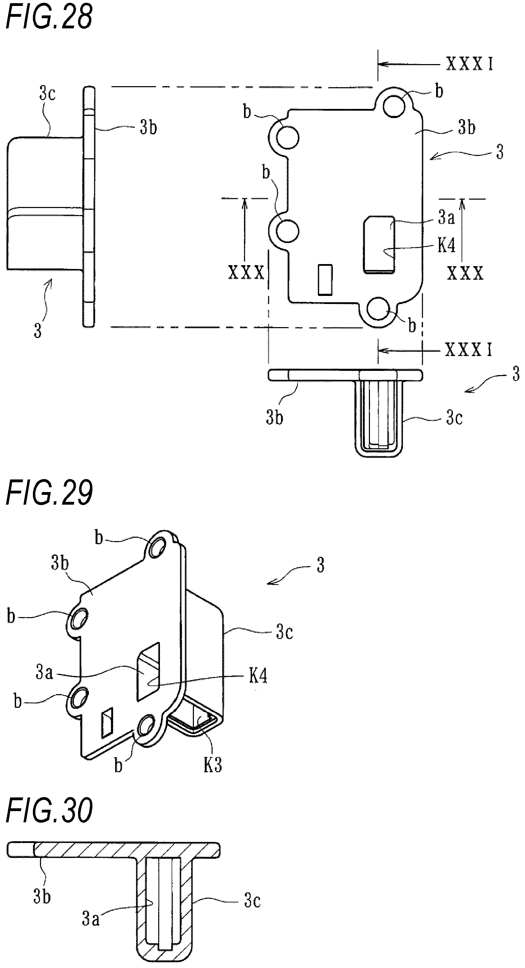

As illustrated in Figs. 26 and 27, the case 3 can be attached to the opening portion 2a of the housing 2. As illustrated in Figs. 28 to 31, the case 3 is configured to include the cover portion 3b which covers the opening portion 2a in a state of being attached to the housing 2 and the protruding portion 3c which protrudes from the cover portion 3b to the accommodation space D of the housing 2. An accommodation portion (accommodation recess portion 3a) capable of accommodating the magnetic sensor 5 and the substrate 4 is formed in the protruding portion 3c of the case 3.

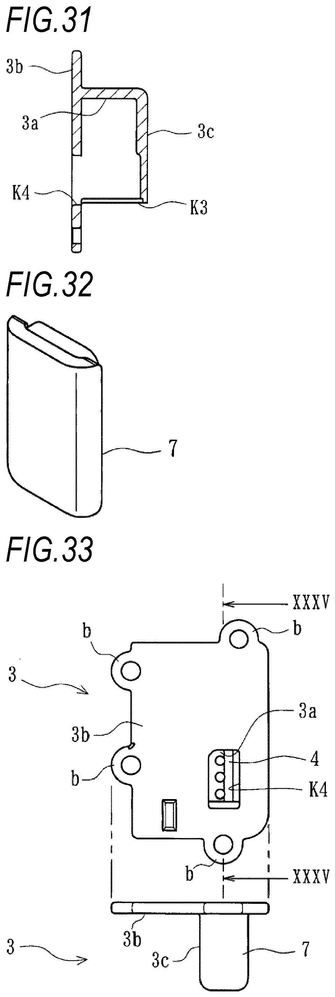

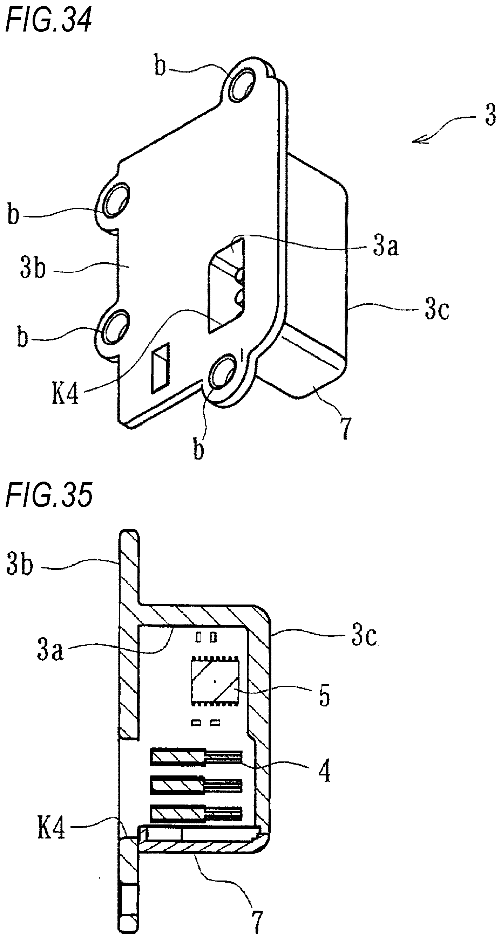

Here, the accommodation portion according to the embodiment is composed of the accommodation recess portion 3a opened on a side surface of the protruding portion 3c and at a predetermined position of the cover portion 3b. As illustrated in Figs. 33 to 35, the accommodation portion is configured so that the magnetic sensor 5 can be attached via an opening K3 on the side surface of the protruding portion 3c and the wiring h of the magnetic sensor 5 is extended to the outside via an opening K4 on the cover portion 3b side. Thereby, in the embodiment, the work of accommodating the magnetic sensor 5 in the accommodation recess portion 3a can be easily performed and the wiring h of the magnetic sensor 5 can be easily extended.

Further, in the embodiment, as illustrated in the drawings mentioned above, the opening K3 on the side surface of the protruding portion 3c and the opening K4 on the cover portion 3b side in the accommodation recess portion 3a are formed separately (independent openings which are not continuous, unlike in the third embodiment) and a closing member 7 for closing the opening K3 on the side surface of the protruding portion 3c is provided. As illustrated in Fig. 32, the closing member 7 is composed of a part having a shape corresponding to the opening K3 on the side surface of the protruding portion 3c. Also, as illustrated in Figs. 33 to 35, the closing member 7 is configured to close the opening K3 in a state where the magnetic sensor 5 and the substrate 4 are accommodated in the accommodation recess portion 3a.

According to the embodiment, the opening K3 on the side surface of the protruding portion 3c and the opening K4 on the cover portion 3b side in the accommodation recess portion 3a are formed separately and the closing member 7 for closing the opening K3 on the side surface of the protruding portion 3c is provided. Thereby, the sealing property between the opening portion 2a of the housing 2 and the case 3 can be improved as compared with the one having the continuous opening of the third embodiment and the closing member 7 can ensure the sealing property of the opening K3 on the side surface of the protruding portion 3c.

Next, a fifth embodiment according to the invention will be described.

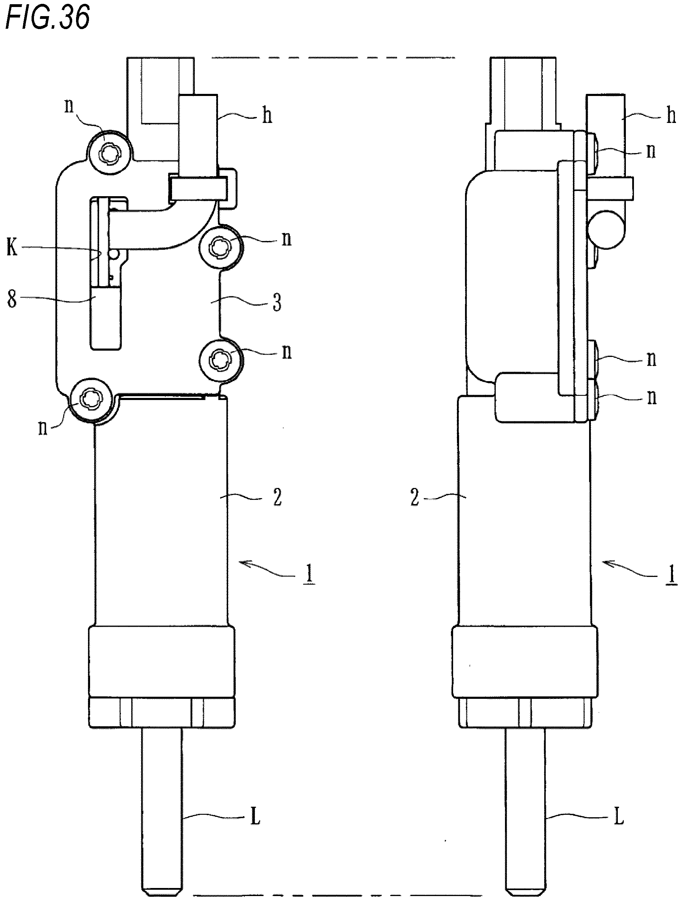

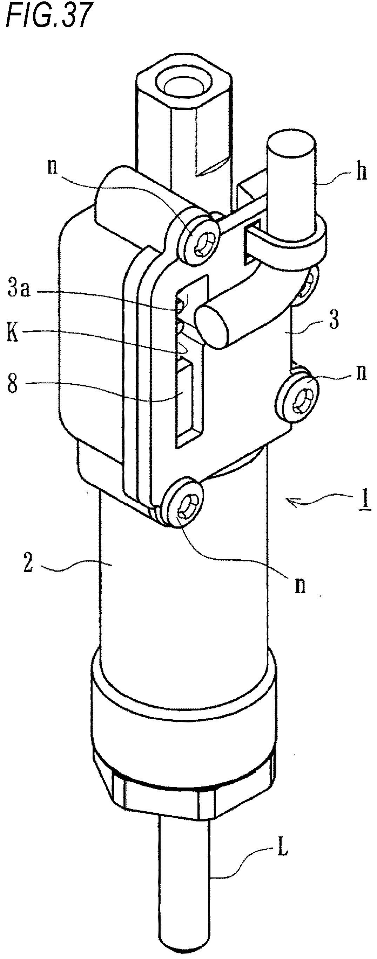

The shift device 1 according to the embodiment is for transmitting the shift operation of the shift pedal of a vehicle such as a two-wheeled vehicle to the transmission to perform the gear-shifting operation. As illustrated in Figs. 36 and 37, the shift device 1 is configured to include the shaft member L, the housing 2, the permanent magnet, the case 3, and the magnetic sensor 5 (detecting unit) (refer to the first embodiment for details of each component other than the case 3). The same components as those in the first embodiment are designated by the same reference numerals and letters.

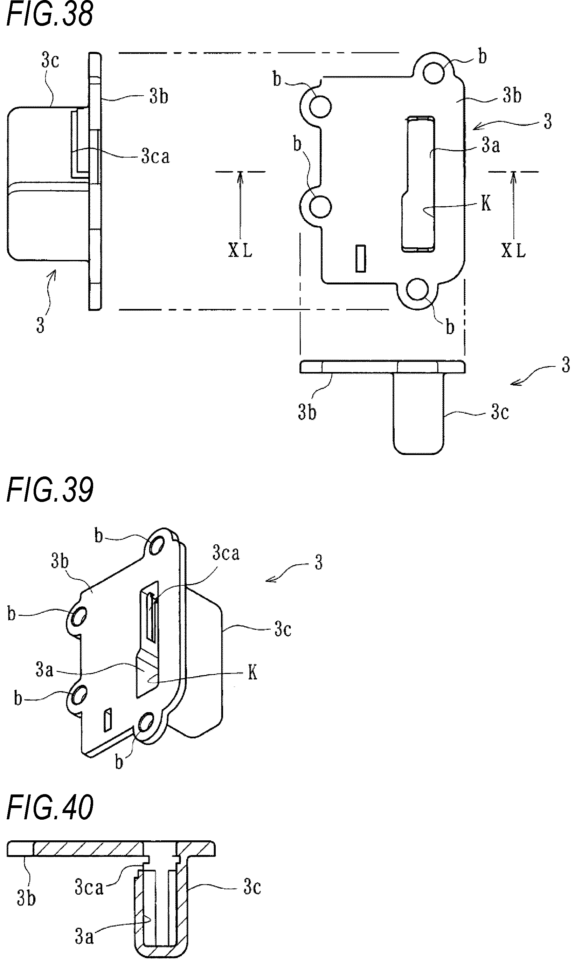

As illustrated in Figs. 36 and 37, the case 3 can be attached to the opening portion 2a of the housing 2. As illustrated in Figs. 38 to 40, the case 3 includes the cover portion 3b which covers the opening portion 2a in a state of being attached to the housing 2 and the protruding portion 3c which protrudes from the cover portion 3b to the accommodation space D of the housing 2. An accommodation portion (accommodation recess portion 3a) capable of accommodating the magnetic sensor 5 and the substrate 4 is formed in the protruding portion 3c of the case 3.

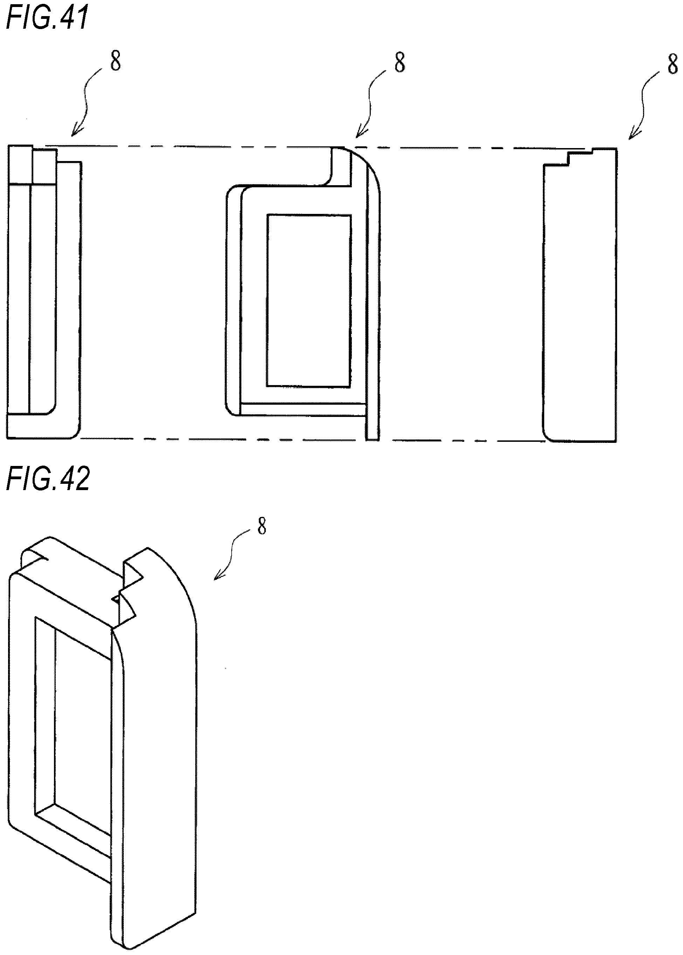

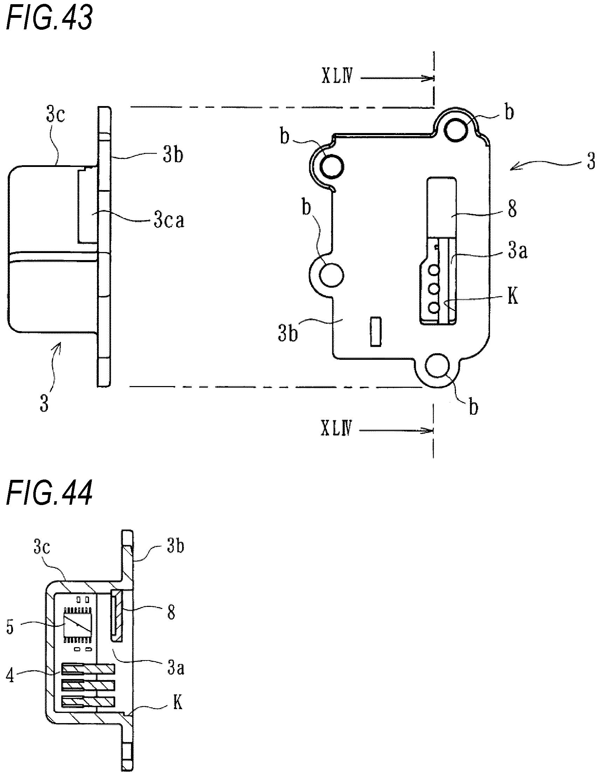

Here, in the case 3 according to the embodiment, as illustrated in Figs. 38 to 40, an insertion port 3ca is formed on the side surface of the protruding portion 3c at a position directly below the cover portion 3b and a shielding member 8 as illustrated in Figs. 41 and 42 can be inserted into the insertion port 3ca. As illustrated in Figs. 43 and 44, the shielding member 8 is configured to be fixed at a position above the magnetic sensor 5 accommodated in the accommodation recess portion 3a by being inserted into the insertion port 3ca of the protruding portion 3c. As a result, the shielding member 8 can shield the magnetic sensor 5 from the outside.

According to the embodiment, since it is provided with the shielding member 8 which can be inserted into the case 3 and can shield the magnetic sensor 5 accommodated in the accommodation recess portion 3a from the outside, the magnetic sensor 5 in the accommodation recess portion 3a can be covered with the shielding member 8 to ensure protection. Further, in the embodiment, since the shielding member 8 covers an upper side of the magnetic sensor 5 and does not reach an upper position of the wiring h extending from the magnetic sensor 5, the wiring h can be satisfactorily extended to the outside.

Next, a sixth embodiment according to the invention will be described.

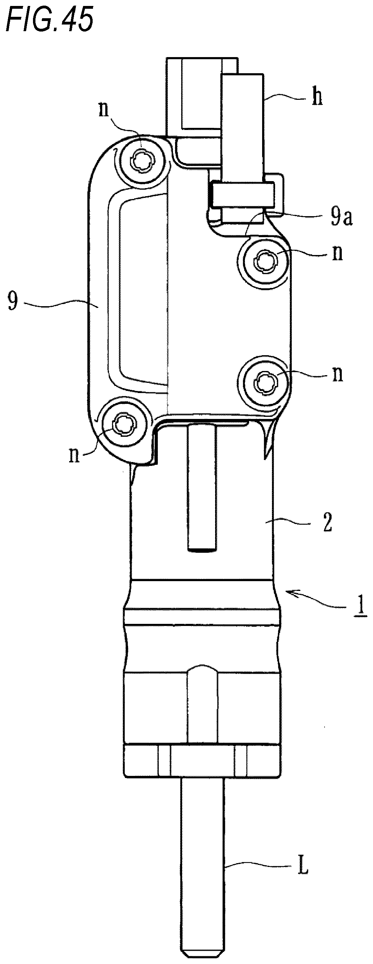

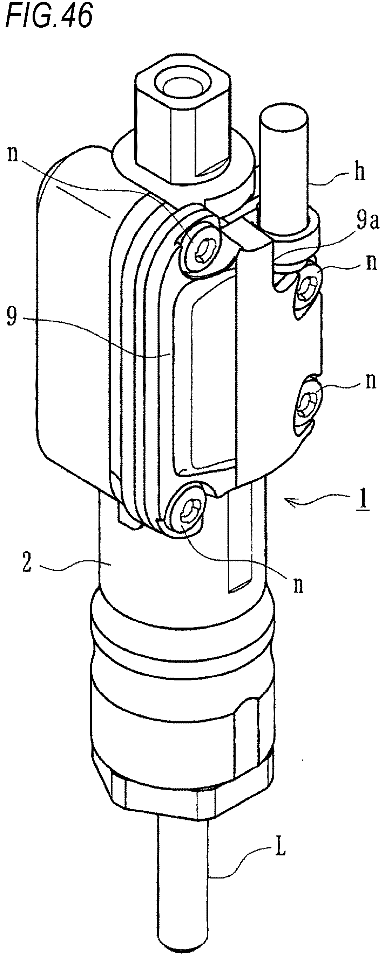

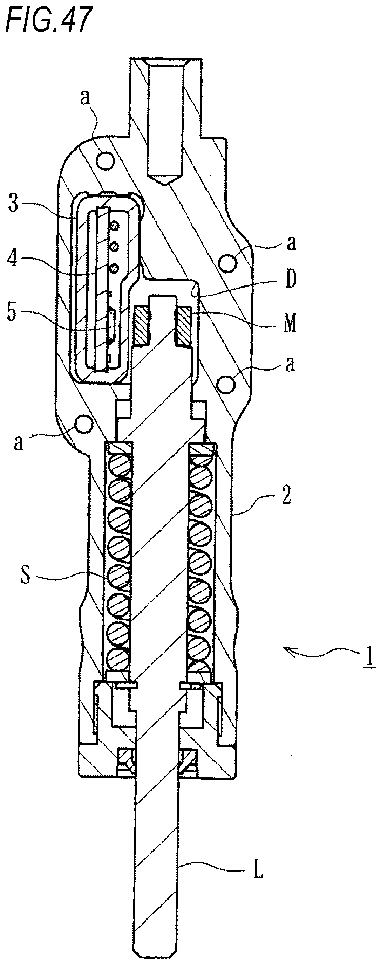

The shift device 1 according to the embodiment is for transmitting the shift operation of the shift pedal of a vehicle such as a two-wheeled vehicle to the transmission to perform the gear-shifting operation. As illustrated in Figs. 45 to 47, the shift device 1 is configured to include the shaft member L, the housing 2, the permanent magnet M, the case 3, and the magnetic sensor 5 (detecting unit) (refer to the first embodiment for details of each component other than the case 3). The same components as those in the first embodiment are designated by the same reference numerals and letters.

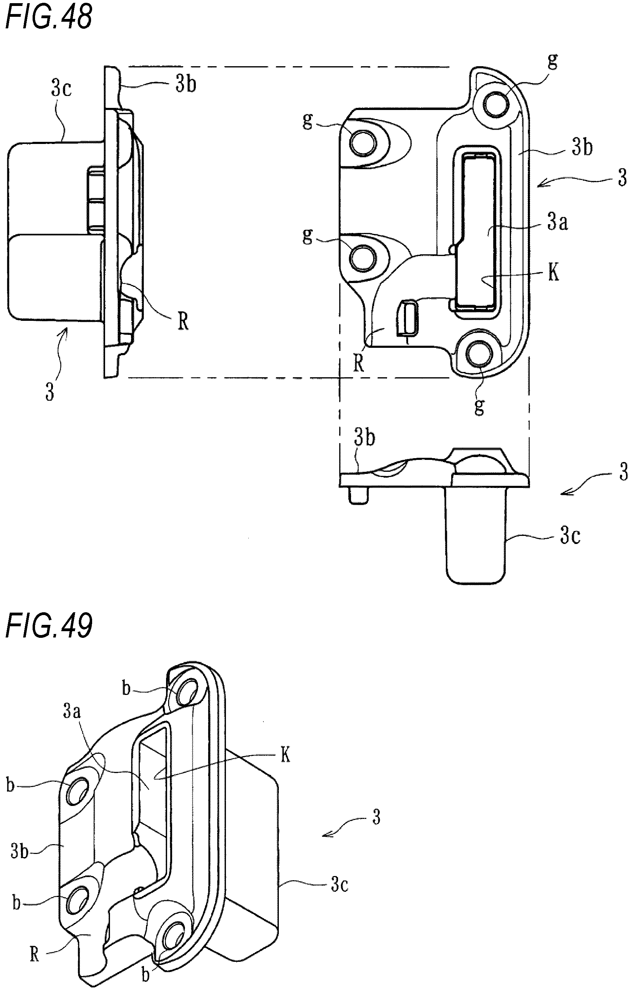

As illustrated in Figs. 45 to 47, the case 3 can be attached to the opening portion 2a of the housing 2. As illustrated in Figs. 48 and 49, the case 3 is configured to include the cover portion 3b which covers the opening portion 2a in a state of being attached to the housing 2, and the protruding portion 3c which protrudes from the cover portion 3b to the accommodation space D of the housing 2. An accommodation portion (accommodation recess portion 3a) capable of accommodating the magnetic sensor 5 and the substrate 4 is formed in the protruding portion 3c of the case 3.

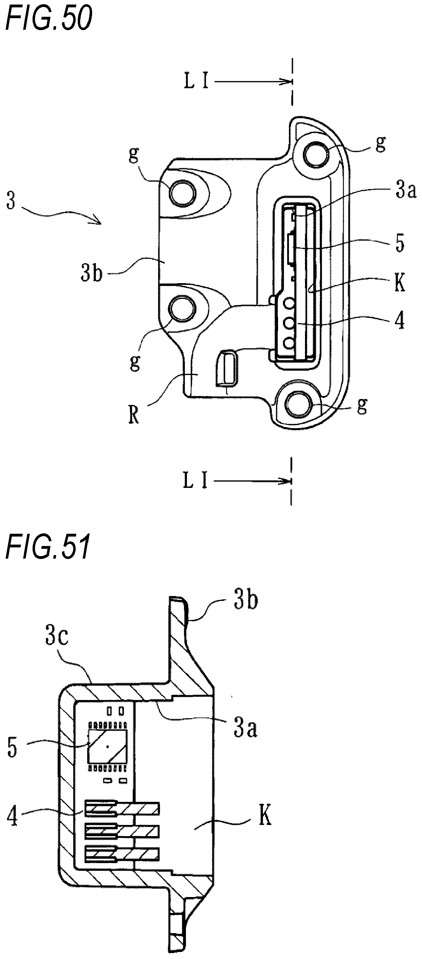

As illustrated in Figs. 38 to 40, the accommodation portion according to the embodiment is composed of the accommodation recess portion 3a opened at a predetermined position of the cover portion 3b. Further, as illustrated in Figs. 50 and 51, in the accommodation portion according to the embodiment, the magnetic sensor 5 can be attached via the opening K of the accommodation recess portion 3a and the wiring h of the magnetic sensor 5 is extended from the opening K to the outside. Further, the case 3 according to the embodiment has a groove shape R extending from the opening K to an edge portion and the wiring h is extended along the groove shape R. A screw hole g corresponding to the screw hole a of the housing 2 is formed on a peripheral edge of the cover portion 3b. Further, in the accommodation recess portion 3a, a resin sealing material is filled and solidified in a state where the magnetic sensor 5 and the substrate 4 are accommodated.

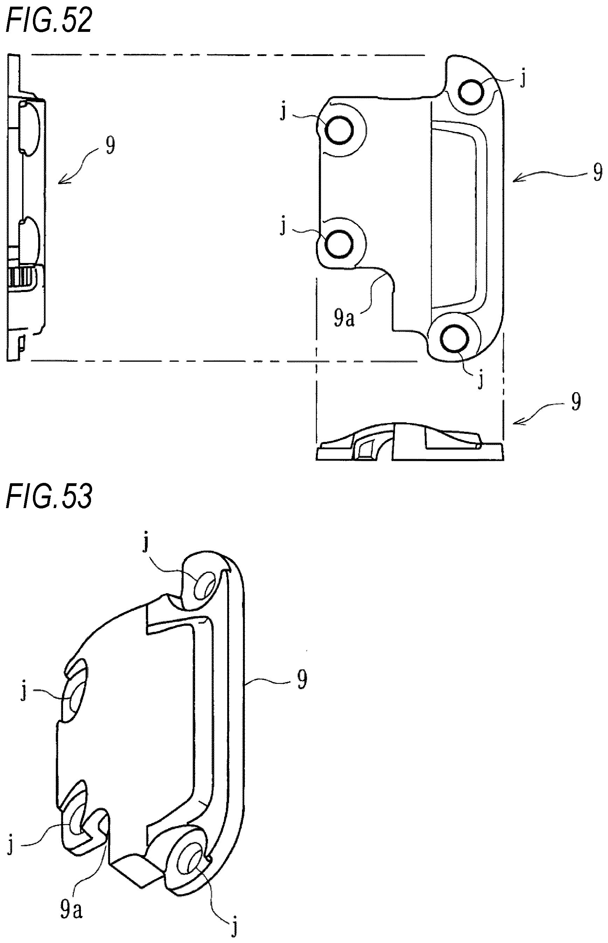

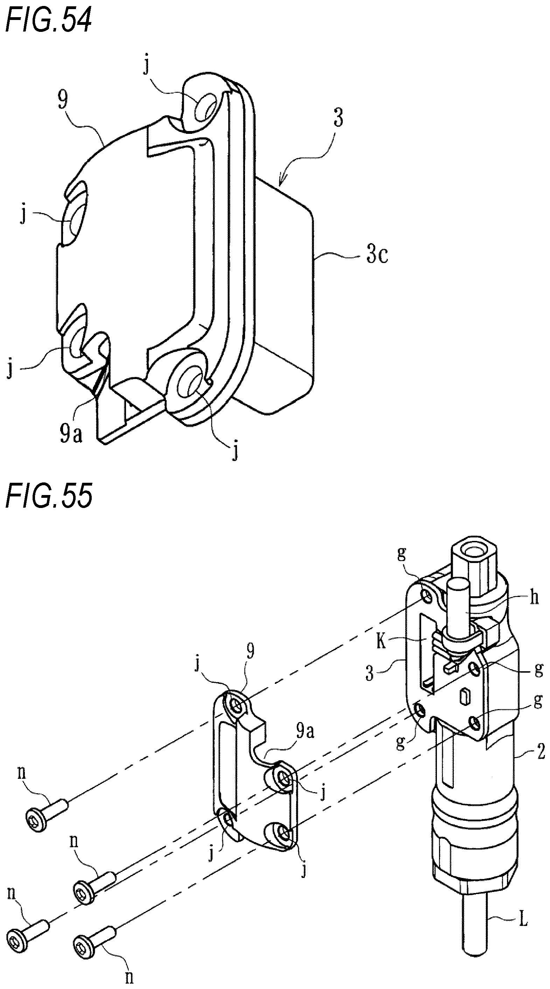

Here, the shift device 1 according to the embodiment includes a lid member 9 attached to the cover portion 3b in the case 3 and covering the opening K of the accommodation recess portion 3a. As illustrated in Figs. 52 and 53, the lid member 9 has a three-dimensional shape and a screw hole j corresponding to the screw hole g of the case 3 is formed on a peripheral edge portion thereof. Further, when the lid member 9 is attached to the case 3, as illustrated in Fig. 54, the lid member 9 is configured to cover a surface area of the cover portion 3b. In addition, the lid member 9 is partially formed with a notch portion 9a, and thus interference with the wiring h arranged at that position is avoided.

Further, as illustrated in Fig. 55, the lid member 9 according to the embodiment is positioned while matching the screw hole j with the screw hole g of the case 3, and the lid member 9 is configured to be fastened and fixed together with the case 3 by inserting the screw n into the screw holes g and j and the screw hole a of the housing 2. Therefore, the design of the three-dimension-shaped lid member 9 can be further improved and the surface area of the case 3 can be widely covered by the lid member 9 being fastened together with the case 3.

However, the lid member 9 according to the embodiment is configured to cover the surface area of the case 3 while avoiding an extension portion of the wiring h with the notch portion 9a. However, as similar to the lid member 9 of the second embodiment, the lid member 9 may form a shape such as a bulging portion 6a (see Figs. 16 and 17) which bulges along the wiring h extending from the opening K. In the embodiment, the cover portion 3b of the case 3 has the opening K to which the magnetic sensor 5 can be attached. However, as in the case 3 of the third and fourth embodiments, the openings (K1, K2) may be respectively formed on the cover portion 3b of the case 3 and the side surface of the protruding portion 3c. Alternatively, as in the fifth embodiment, the shielding member 8 may be inserted into the case 3.

In the first to sixth embodiments described above, the opening portion 2a is formed in the housing 2 at a portion corresponding to the arrangement position of the magnetic sensor 5 and the case 3 is attached to the opening portion 2a, and further the case 3 has the cover portion 3b which covers the opening portion 2a and the protruding portion 2c which protrudes from the cover portion 3b to the accommodation space D of the housing 2, and still further, an accommodation portion (accommodation recess portion 3a) capable of accommodating the magnetic sensor 5 is formed in the protruding portion 2c. Therefore, the displacement of the shaft member L can be detected with high accuracy and the influence of magnetism from the outside can be suppressed to prevent malfunction.

Although the first to sixth embodiments are described above, the invention is not limited thereto. For example, the case 3 may be fixed to the housing 2 with the attachment screw n, or may be fixed by other means. Also, a protective member having a form different from that of the lid members 6 and 9 may be attached to the case 3. Further, in the invention, the magnetic sensors 5 may be attached to front and back surfaces of the substrate 4 to detect magnetic changes respectively. Alternatively, in the invention, an element having another function different from that of the magnetic sensor 5 may be formed on the substrate 4.

The shift device of the invention can be applied to a device having a different appearance shape or a device to which other functions are added, as long as an opening portion is formed in a housing at a portion corresponding to an arrangement position of a magnetic generating unit and a case is attached to the opening portion, and further the case has a cover portion which covers the opening portion and a protrusion portion which protrudes from the cover portion to an accommodation space of the housing, and still further an accommodation portion capable of accommodating a detecting unit is formed in the protrusion portion.

## Claims

1. A shift device (1) comprising:
a shaft member (L) configured to be displaced according to a shift operation of a shift pedal of a vehicle;
a housing (2) which has an accommodation space (D) configured to accommodate the shaft member (L) in a displaceable manner, the housing (2) configured to move integrally with the shaft member (L) in a state where the shaft member (L) reaches a displacement end to perform a gear-shifting operation of the vehicle;
a permanent magnet (M) which is formed on the shaft member (L), is displaceable together with the shaft member (L), and generates magnetism; and
a detecting unit (5) which detects displacement of the shaft member (L) with respect to the housing (2) by detecting a magnetic change of the permanent magnet (M), wherein
an opening portion (2a) is formed in the housing (2) at a portion corresponding to an arrangement position of the permanent magnet (M), a case (3) is attached to the opening portion (2a), and the case (3) has a cover portion (3b) which covers the opening portion (2a) and a protrusion portion (3c) which protrudes from the cover portion (3b) to the accommodation space (D) of the housing (2) and an accommodation portion capable of accommodating the detecting unit (5) is formed in the protrusion portion (3c).

2. The shift device (1) according to claim 1, wherein:
the accommodation portion includes an accommodation recess portion (3a) opened at a predetermined position of the cover portion (3b); and
the detecting unit (5) is configured to be attached through an opening (K) of the accommodation recess portion (3a), and wiring (h) of the detecting unit (5) is extended to the outside from the opening (K).

3. The shift device (1) according to claim 2, wherein
a lid member (6, 9) attached to the cover portion (3b) in the case (3) and covering the opening (K) of the accommodation recess portion (3a) is provided.

4. The shift device (1) according to claim 3, wherein
the lid member (6, 9) covers a surface area of the cover portion (3b) including the opening (K) of the accommodation recess portion (3a), and a bulging portion (6a) bulging along the wiring (h) extending from the opening (h) is formed.

5. The shift device (1) according to claim 3 or 4, wherein
the lid member (6, 9) has a three-dimensional shape, covers a surface area of the cover portion (3b), and is fastened and fixed together with the case (3).

6. The shift device (1) according to claim 2, wherein
a shielding member (8), configured to be inserted into the case (3) and shield the detecting unit (5) accommodated in the accommodation recess portion (3a) from the outside, is provided.

7. The shift device (1) according to claim 1, wherein
the accommodation portion (3a) includes an accommodation recess portion (3a) opened on a side surface of the protrusion portion (3c) and at a predetermined position of the cover portion (3b), the detecting unit (5) is configured to be attached through an opening (K1, K3) on the side surface of the protrusion portion (3c), and the wiring (h) of the detecting unit (5) is extended to the outside through an opening (K2, K4) on the cover portion (3b) side.

8. The shift device (1) according to claim 7, wherein
the opening (K1) on the side surface of the protrusion portion (3c) and the opening (K2) on the cover portion (3b) side in the accommodation recess portion (3a) form a continuous opening.

9. The shift device (1) according to claim 7, wherein
the opening (K3) on the side surface of the protrusion portion (3c) and the opening (K4) on the cover portion (3b) side in the accommodation recess portion (3a) are separately formed, and a closing member (7) for closing the opening (K3) on the side surface of the protrusion portion (3c) is provided.

## Patentansprüche

1. Umschaltvorrichtung (1), umfassend:
ein Wellenelement (L), das so konfiguriert ist, dass es entsprechend einer Schaltbetätigung eines Schaltpedals eines Fahrzeugs verschoben wird;
ein Gehäuse (2), das einen Aufnahmeraum (D) aufweist, der so konfiguriert ist, dass er das Wellenelement (L) verschiebbar aufnimmt, wobei das Gehäuse (2) so konfiguriert ist, dass es sich in einem Zustand, in dem das Wellenelement (L) ein Verschiebungsende erreicht, integral mit dem Wellenelement (L) bewegt, um eine Gangschaltbetätigung des Fahrzeugs auszuführen;
einen Permanentmagneten (M), der an dem Wellenelement (L) ausgebildet ist, zusammen mit dem Wellenelement (L) verschiebbar ist und Magnetismus erzeugt; und
eine Erfassungseinheit (5), die eine Verschiebung des Wellenelements (L) in Bezug auf das Gehäuse (2) durch Erfassen einer magnetischen Änderung des Permanentmagneten (M) erfasst, wobei
in dem Gehäuse (2) an einem Abschnitt, der einer Anordnungsposition des Permanentmagneten (M) entspricht, ein Öffnungsabschnitt (2a) ausgebildet ist, an dem Öffnungsabschnitt (2a) ein Gehäuse (3) angebracht ist, und das Gehäuse (3) einen Abdeckungsabschnitt (3b), der den Öffnungsabschnitt (2a) abdeckt, und einen Vorsprungsabschnitt (3c) aufweist, der von dem Abdeckungsabschnitt (3b) in den Aufnahmeraum (D) des Gehäuses (2) hineinragt, und in dem Vorsprungsabschnitt (3c) ein Aufnahmeraum ausgebildet ist, der die Erfassungseinheit (5) aufnehmen kann.

2. Umschaltvorrichtung (1) nach Anspruch 1, wobei:
der Aufnahmeabschnitt einen Aufnahmeaussparungsabschnitt (3a) umfasst, der an einer vorbestimmten Position des Abdeckungsabschnitts (3b) geöffnet ist; und
die Erfassungseinheit (5) so konfiguriert ist, dass sie durch eine Öffnung (K) des Aufnahmeaussparungsabschnitts (3a) befestigt wird, und eine Verdrahtung (h) der Erfassungseinheit (5) von der Öffnung (K) nach außen verläuft.

3. Umschaltvorrichtung (1) nach Anspruch 2, wobei
ein Deckelelement (6, 9) vorgesehen ist, das an dem Abdeckungsabschnitt (3b) in dem Gehäuse (3) angebracht ist und die Öffnung (K) des Aufnahmeaussparungsabschnitts (3a) abdeckt.

4. Umschaltvorrichtung (1) nach Anspruch 3, wobei
das Deckelelement (6, 9) einen Flächenbereich des Abdeckungsabschnitts (3b) einschließlich der Öffnung (K) des Aufnahmeaussparungsabschnitts (3a) abdeckt und ein sich entlang der sich von der Öffnung (h) erstreckenden Verdrahtung (h) wölbender Wölbungsabschnitt (6a) ausgebildet ist.

5. Umschaltvorrichtung (1) nach Anspruch 3 oder 4, wobei
das Deckelelement (6, 9) eine dreidimensionale Form aufweist, einen Flächenbereich des Abdeckungsabschnitts (3b) abdeckt und mit dem Gehäuse (3) verbunden und fixiert ist.

6. Umschaltvorrichtung (1) nach Anspruch 2, wobei
ein Abschirmelement (8) vorgesehen ist, das so konfiguriert ist, dass es in das Gehäuse (3) eingesetzt wird und die in dem Aufnahmeaussparungsabschnitt (3a) aufgenommene Erfassungseinheit (5) von außen abschirmt.

7. Umschaltvorrichtung (1) nach Anspruch 1, wobei
der Aufnahmeabschnitt (3a) einen Aufnahmeaussparungsabschnitt (3a) umfasst, der an einer Seitenfläche des Vorsprungsabschnitts (3c) und an einer vorbestimmten Position des Abdeckungsabschnitts (3b) geöffnet ist, die Erfassungseinheit (5) so konfiguriert ist, dass sie durch eine Öffnung (K1, K3) an der Seitenfläche des Vorsprungsabschnitts (3c) befestigt wird, und die Verdrahtung (h) der Erfassungseinheit (5) durch eine Öffnung (K2, K4) an der Abdeckungsabschnittsseite nach außen verläuft.

8. Umschaltvorrichtung (1) nach Anspruch 7, wobei
die Öffnung (K1) an der Seitenfläche des Vorsprungsabschnitts (3c) und die Öffnung (K2) an der Abdeckungsabschnittsseite in dem Aufnahmeaussparungsabschnitt (3a) eine durchgehende Öffnung bilden.

9. Umschaltvorrichtung (1) nach Anspruch 7, wobei
die Öffnung (K3) an der Seitenfläche des Vorsprungsabschnitts (3c) und die Öffnung (K4) an der Abdeckungsabschnittsseite in dem Aufnahmeaussparungsabschnitt (3a) separat ausgebildet sind und ein Verschlusselement (7) zum Verschließen der Öffnung (K3) an der Seitenfläche des Vorsprungsabschnitts (3c) vorgesehen ist.

## Revendications

1. Dispositif de changement de vitesse (1) comprenant :
un élément d'arbre (L) configuré pour être déplacé conformément à une opération de changement de vitesse d'une pédale de changement de vitesse d'un véhicule ;
un boîtier (2) qui comporte un espace de logement (D) configuré pour loger l'élément d'arbre (L) d'une manière déplaçable, le boîtier (2) étant configuré pour être déplacé d'un seul tenant avec l'élément d'arbre (L) dans un état dans lequel l'élément d'arbre (L) atteint une extrémité de déplacement pour effectuer une opération de changement de vitesse du véhicule ;
un aimant permanent (M) qui est formé sur l'élément d'arbre (L), qui peut être déplacé en association avec l'élément d'arbre (L) et qui génère du magnétisme ; et
une unité de détection (5) qui détecte le déplacement de l'élément d'arbre (L) par rapport au boîtier (2) en détectant une variation magnétique de l'aimant permanent (M),
dans lequel :
une partie d'ouverture (2a) est formée dans le boîtier (2) au niveau d'une partie qui correspond à une position d'agencement de l'aimant permanent (M), un carter (3) est lié à la partie d'ouverture (2a) et le carter (3) comporte une partie de recouvrement (3b) qui recouvre la partie d'ouverture (2a) et une partie de protubérance (3c) qui fait saillie depuis la partie de recouvrement (3b) jusqu'à l'espace de logement (D) du boîtier (2), et une partie de logement pouvant loger l'unité de détection (5) est formée dans la partie de protubérance (3c).

2. Dispositif de changement de vitesse (1) selon la revendication 1, dans lequel :
la partie de logement inclut une partie d'évidement de logement (3a) qui débouche au niveau d'une position prédéterminée de la partie de recouvrement (3b) ; et
l'unité de détection (5) est configurée pour être liée au travers d'une ouverture (K) de la partie d'évidement de logement (3a) et un câblage (h) de l'unité de détection (5) est étendu en direction de l'extérieur depuis l'ouverture (K).

3. Dispositif de changement de vitesse (1) selon la revendication 2, dans lequel :
un élément de capuchon (6, 9) qui est lié à la partie de recouvrement (3b) dans le carter (3) et qui recouvre l'ouverture (K) de la partie d'évidement de logement (3a) est prévu.

4. Dispositif de changement de vitesse (1) selon la revendication 3, dans lequel :
l'élément de capuchon (6, 9) recouvre une aire de surface de la partie de recouvrement (3b) qui inclut l'ouverture (K) de la partie d'évidement de logement (3a), et une partie de bombement (6a) qui est bombée le long du câblage (h) qui est étendu depuis l'ouverture (K) est formée.

5. Dispositif de changement de vitesse (1) selon la revendication 3 ou 4, dans lequel :
l'élément de capuchon (6, 9) présente une forme tridimensionnelle, recouvre une aire de surface de la partie de recouvrement (3b) et est attaché et fixé en association avec le carter (3).

6. Dispositif de changement de vitesse (1) selon la revendication 2, dans lequel :
un élément de protection (8), configuré pour être inséré à l'intérieur du carter (3) et pour protéger de l'extérieur l'unité de détection (5) qui est logée dans la partie d'évidement de logement (3a) est prévu.

7. Dispositif de changement de vitesse (1) selon la revendication 1, dans lequel :
la partie de logement (3a) inclut une partie d'évidement de logement (3a) qui débouche sur une surface latérale de la partie de protubérance (3c) et au niveau d'une position prédéterminée de la partie de recouvrement (3b), l'unité de détection (5) est configurée pour être liée au travers d'une ouverture (K1, K3) sur la surface latérale de la partie de protubérance (3c), et le câblage (h) de l'unité de détection (5) est étendu en direction de l'extérieur au travers d'une ouverture (K2, K4) sur le côté de la partie de recouvrement (3b).

8. Dispositif de changement de vitesse (1) selon la revendication 7, dans lequel :
l'ouverture (K1) sur la surface latérale de la partie de protubérance (3c) et l'ouverture (K2) sur le côté de la partie de recouvrement (3b) dans la partie d'évidement de logement (3a) forment une ouverture continue.

9. Dispositif de changement de vitesse (1) selon la revendication 7, dans lequel :
l'ouverture (K3) sur la surface latérale de la partie de protubérance (3c) et l'ouverture (K4) sur le côté de la partie de recouvrement (3b) dans la partie d'évidement de logement (3a) sont formées de façon séparée et un élément de fermeture (7) pour fermer l'ouverture (K3) sur la surface latérale de la partie de protubérance (3c) est prévu.
